Europäisches Patentamt

European Patent Office

Office européen des brevets

(19)

(11) **EP 1 204 248 A1**

(12) **EUROPEAN PATENT APPLICATION**

(43) Date of publication:
  **08.05.2002 Bulletin 2002/19**

(51) Int Cl.$^7$: **H04L 12/56**

(21) Application number: **00309851.4**

(22) Date of filing: **06.11.2000**

(84) Designated Contracting States:
  **AT BE CH CY DE DK ES FI FR GB GR IE IT LI LU MC NL PT SE TR**
  Designated Extension States:
  **AL LT LV MK RO SI**

(71) Applicant: **Agilent Technologies, Inc. (a Delaware corporation)**
  **Palo Alto, CA 94303 (US)**

(72) Inventor: **Woodroffe, Brian Warren**
  **Barnton, Edinburgh EH4 6DZ, Scotland (GB)**

(74) Representative: **Coker, David Graeme et al**
  **Agilent Technologies UK Ltd,**
  **Legal Department,**
  **M/S CSC1GM2,**
  **Eskdale Road,**
  **Winnersh Triangle**
  **Wokingham, Berks RG41 5DZ (GB)**

(54) **Monitoring traffic in telecommunications networks**

(57)  A method and apparatus for monitoring traffic in telecommunications networks, in particular applied to the problem of recognising real-time traffic such as voice traffic in packet- or cell-based networks through network traffic characterisation. The method (90, 92) classifies data traffic in a packet-based communications network conveying different classes of data through the monitoring of data traffic so as to identify sequences of data packets of unknown class transmitted between a source address and a destination address, subsequently measuring parameters of at least a significant part of the packet sequence and deriving from the measured parameters a probable classification of the data conveyed in the packet sequence.

FIG. 4

EP 1 204 248 A1

**Description**

The invention relates to a method and apparatus for monitoring traffic in telecommunications networks. The invention may in particular be applied to the problem of recognising real-time traffic such as voice traffic in packet- or cell-based networks through network traffic characterisation.

In modem telecommunications networks there are a variety of different types of information transmitted and received, commonly classified as either real-time (RT) traffic or non-real-time (non-RT), data traffic. Voice and video are examples of 'real-time' traffic. Internet web pages, file transfer, remote log-in and e-mail are examples of non-real-time. Different types of network can be used to carry the different traffic types from source to destination.

For example, a data network packages data in segments, labels it, and delivers it as a series of 'packets' to the network for transmission. The packaged data may be examined and routed at inter-mediate network stages, or nodes. In this description, the term 'packet' is used to include the more specific terms such as 'packet', 'cell', 'frame' or 'datagram', which are conventionally used in relation to certain of these protocols. Examples of such packet transmission systems include Asynchronous Transfer Mode (ATM), Frame Relay and Internet Protocol (IP). In contrast, when using a traditional voice network (PSTN), the caller signals to the network the requirement for connection (dialling). The network then establishes an end-to-end connection path, which can be talked over, and the connection released back to the network on hanging up.

Packet based networks, although designed for the needs of data, are capable of carrying real-time traffic. Where data networks carry RT traffic, for example internet telephony and video conferencing, the RT data is encoded in packets according to the packet network protocols. However, the different transmission requirements of RT and non-RT traffic make it desirable to identify the traffic types for various reasons. For example, network characterisation and planning, so that the network can be correctly extended to carry the different traffic types. Identification of traffic types may also be desirable for other requirements, for example where voice and data are subject to different tariffs. This information is also useful when developing new networks, in setting and validating network policies and in measuring application conformance.

Accordingly, there is a desire to distinguish between 'normal' and real-time traffic, including voice, over data networks using packet or cell based protocols. However, only the source and destination stations typically 'know' what type of traffic is actually being carried.

The inventors have recognised that it may be possible recognise real-time traffic in a cell or package based network carrying mixed payloads of real-time and non-real-time data through traffic characterisation based on statistical measures of the unknown data traffic, even in the absence of explicit type data.

The invention provides a method of classifying data traffic in a packet-based communications network conveying different classes of data, including the steps of:

(a) monitoring a communications network for data traffic to identify a sequence of data packets of unknown class transmitted between a source address and a destination address;
(b) measuring parameters of at least a significant part of the packet sequence; and
(c) deriving from the measured parameters a probable classification of the data conveyed in the packet sequence.

The classification may distinguish between real-time data traffic and other data in the network. The classification may in particular distinguish between voice traffic and other traffic. How much of the sequence needs to be measured for the results to be significant will clearly depend upon the purpose of the classification, the nature of the parameters being measured, and whether they are fixed or subject to change in the course of a connection. Video traffic similarly can be detected.

Preferably in step (b) a plurality of different parameters are measured, while in step (c) said classification is determined by a combination of processes based on different parameters, the results of each process being combined with the others in accordance with a specific weighting.

The measured parameters may be coding attributes of packets in the sequence. For example, certain types of transport protocol used and specified within the packets, and/or certain error protection protocols, may be particularly associated with real-time traffic, while others are generally used for general data traffic, without the need for actual knowledge of the data type.

The measured parameters may alternatively or in addition include the duration of said sequence. Sequences of longer duration (connections active for a duration of minutes, rather than a few seconds or less) in particular will indicate a high probability of real-time traffic.

The measured parameters may alternatively or in addition include correlation between traffic in said sequence and traffic in a further sequence being transported from said destination address back to said source address. In particular, where periods of activity in one direction are correlated with periods of inactivity in the reverse direction, this can be used as an indicator of duplex voice or videoconference traffic.

The measured parameters may alternatively or in addition comprise timing parameters of individual packets within the sequence. Statistical analysis of such parameters can be used determine said classification.

In one embodiment, the step (b) includes measuring certain timing parameters of events in the sequence, while step (c) includes (i) deriving from the measured timing parameters one or more statistical properties of packet timing during at least a part of the sequence; and (ii) using said statistical properties to determine said classification.

Said events may in particular comprise the arrival of each new packet for the sequence under investigation.

The measured parameters may include the intervals between events within said sequence. In such a case, for example, uniformity of said intervals over a significant part of the sequence may be used to indicate a high probability of real-time traffic. Voice data standards typically define a maximum lag of 20ms in the audio codec, implying that new packets will arrive at approximately 20ms intervals

The step (c)(i) may include filtering events to restrict the events whose measured parameters are included in the derivation of said statistical properties.

In the case where sequences to be classified as carrying real-time traffic are expected to include distinct periods of relative activity interspersed with periods of relative inactivity, said filtering may be performed so as to eliminate periods of inactivity from consideration in deriving said statistical properties. Such filtering can be used, for example, to deal with problems associated with periods of silence in voice traffic, when there may be an absence of detected data packets.

In one embodiment, the sequence is divided for analysis into a sequence of shorter measurement periods, and said filtering is performed by reference to measurements from one measurement period at a time. For voice connections, a suitable period may be for example 100ms.

A number of strategies may be employed to limit erroneous measurements. The filtering may operate simply to omit or delete certain samples from the statistical data, or may modify those samples and/or the statistical database in some predetermined way.

For example, in a first embodiment, only measurement periods preceded by periods containing significant activity are included in the statistical derivation. In an alternative embodiment, the first sample within each measurement period is discarded to eliminate bias in the measurements made. As an alternative measure having the same effect, a separate record of the first sample can be kept which is later removed from population collected in the normal manner.

In obtaining measurements, steps can be taken to improve measurement reliability and to reduce the processing burden involved in traffic type evaluation. The amount of raw data obtained by monitoring network traffic can be reduced by aggregating data for each measurement period, and optionally for groups of measurement periods. For example, summing the samples and the samples squared, while maintaining a count of the samples summed in this way, enables a variety of statistical processes to be performed.

The method may include steps to compensate for variations in the packet arrival (or other event) times caused by outside influences and to accommodate specific traffic patterns, such as when the absence of a signal can lead to a misinterpretation of the data. To alleviate errors due to such factors the inter-packet arrival time can be normalised against an expected arrival time. The probe can synchronise an internal time track against the arriving data packets so as to measure differences between actual arrival times and predicted arrival times.

The measurement may include measurements of correlation between parameters of traffic in opposite directions of a duplex connection. In particular correlation between periods of high traffic in one direction and low traffic in the other may be used as a strong indicator of voice traffic. In a telephone conversation, for example, talk in one direction is generally correlated with silence in the other.

Additional measurements can be used to distinguish multiple from single voice circuits and, where a connection is carrying multiple voice circuits, to take account of the particular attributes of such a connection.

In one embodiment the timestamping of the captured and re-assembled data packets can be carried out on closure of the bit stream representing a data packet and written contiguous with the packet. This can be carried out by a specialist interface card and has the advantage of producing accurate timestamps for the packets which in turns reduces potential errors.

Alternatively, the process of timestamping packets can be carried out separately from the detection and assembling of data packets. Packet capture can be carried out by standard interface means and timestamped by separate means.

The method according to the invention may further comprise using the determined classification automatically to control configuration of the network.

The method may alternatively or yet further comprise using the determined classification to report usage of the network for accounting purposes.

The invention further provides an apparatus for of classifying data traffic in a packet-based communications network conveying different classes of data, the apparatus comprising means arranged to perform the steps of a method according to the invention as set forth above.

The steps of the method as set forth above can conveniently be implemented in a single digital processor chip, although of course hard-wired or "pure software" arrangements could be used instead.

The above and other features, together with their respective advantages, will be apparent to the skilled reader from the description of specific embodiments which follow.

## BRIEF DESCRIPTION OF THE DRAWINGS

Embodiments of the invention will now be described, by way of example only, by reference to the accompanying drawings, in which:

Figure 1 shows a simplified model of a mixed telecommunications and data network;

Figure 2 illustrates differences in call lengths between real-time and non real-time traffic within a mixed network;

Figure 3 illustrates differences in packet delays between real-time and non real-time traffic packets within a mixed network;

Figure 4 shows schematically a process for the recognition of real-time traffic, according to one embodiment of the invention;

Figure 5 illustrates a first measurement scheme implemented within the process of Figure 4; and

Figure 6 illustrates the occurrence and compensation of cell delay variation within the process of Figure 4.

## DETAILED DESCRIPTION OF THE EMBODIMENTS

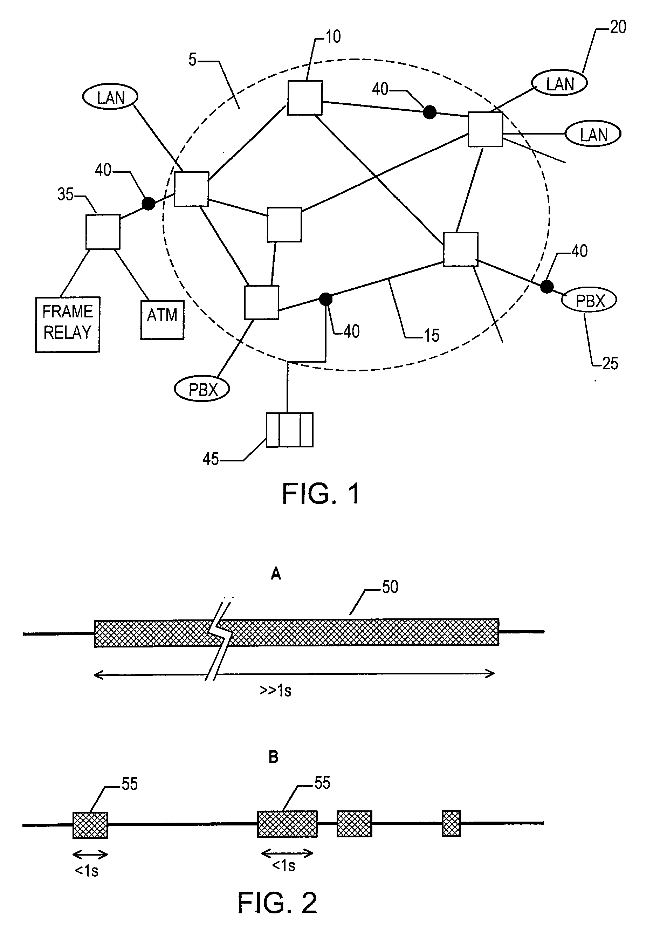

Figure 1 shows a simplified model of a typical cell- or packet-based telecommunications and data network 5. Such a transport network typically comprises cell or packet switches 10 connected by bearers 15. Each bearer is in this example an optical fibre, carrying packetised data with both routing information and data "payload" travelling in the same data stream.

Various devices are attached to the network. For example, local area networks (LANs) 20 and private branch exchanges (PBXs) 25. Over this network the payload may comprise a mixture of voice traffic and/or other data types. Different cell and packet transmission systems protocols are accommodated. Examples shown are connections 35 to Frame Relay Gateway and asynchronous transfer mode (ATM) equipment, while other possibilities are so-called datagram networks and Internet Protocol (IP). Hereinafter the term 'packet' shall be taken to include such equivalents as 'cell', 'frame' and 'datagram', which are often used in relation to these different protocols.

Possible monitoring sites on various bearers in the network are shown at 40 and elsewhere. A network probe 45 can be attached at such sites in order to monitor and analyse network traffic characteristics over a circuit connecting a source address and a destination address.

In developing and maintaining a mixed services network it is desirable to monitor the type of traffic.

This may be to allow the service provider to apply different tariffs to different traffic types, or for technical reasons to ensure adequate network performance.

By processing and analysing traffic packet data gathered the inventors have recognised that it is possible to establish the probability of whether or not the traffic is real-time or data traffic. To recognise RT traffic within a network, there is proposed a process for recognising automatically the patterns that are common within RT traffic that are absent within non-RT traffic and vice-versa. RT traffic has the following generalised characteristics, any or all of which can be exploited in such a process:

1. Long Duration Of The 'Call'.

Figure 2 illustrates schematically differences between RT traffic A and non-RT traffic B within a mixed network, showing RT traffic call lengths 50 and non-RT traffic call lengths 55. Whereas a voice or video (real-time) call can be of minutes duration a data (non-real-time) call is typically less than a second, or only a very few seconds. Well known examples of data calls such as internet web connections may appear to last a long time. However, because loading a web page involves loading of many separate elements, each one of which is a TCP connection of its own, the duration of the calls is short.

2. Non-Error Corrected Coding.

Whereas most data calls use an error correcting transmitting coding, for example TCP (transmission control protocol), real-time calls use a non-error correcting coding such as User Datagram Protocol (UDP).

3. Regular traffic.

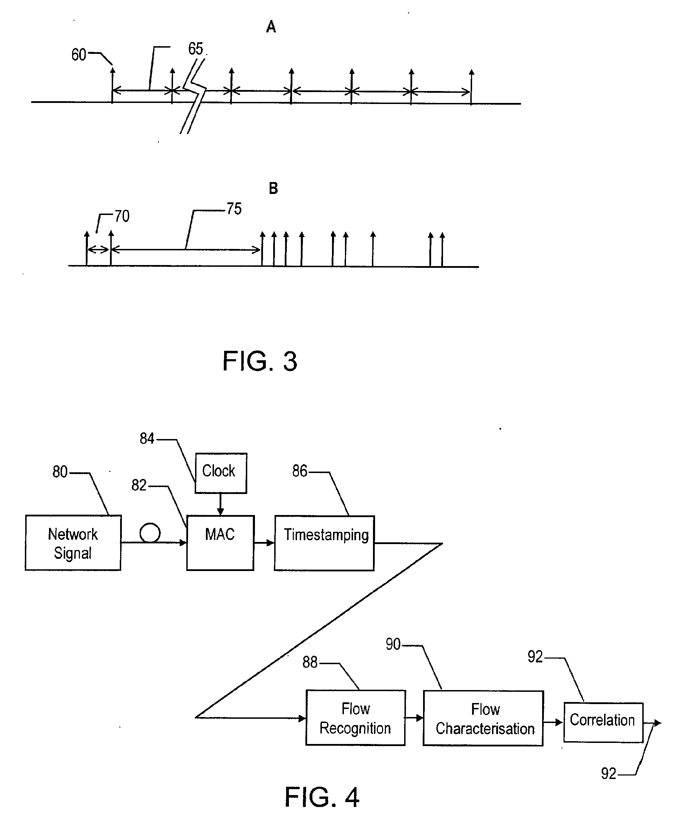

Figure 3 illustrates differences in packet delays between RT traffic A and non-RT traffic B within a mixed network. Traffic packets 60 and various intervals 65, 70, 75 between successive packets are shown . The nature of RT traffic by its very nature imposes time constraints on the transmission of packets. In the case of real time traffic A the packets 60 are separated by regular intervals 65, typically of 20ms for voice traffic. For non-real-time traffic the intervals 70, 75 can be widely variable between packets. The requirements of data within a network impose few, if any, real-time constraints upon delivery as data integrity is a more important requirement. Non-RT traffic has none of the constraints that RT traffic has as far as being delivered regularly are concerned. Data transfer integrity is ensured by re-transmitting data that was lost or corrupted by the network. Such re-transmissions take extra time, and delay the delivery of later data whilst the current data is corrected. Real time data such as voice or video on the other hand requires real time delivery of subsequent data, even at the expense of non-delivery or delivery of corrupt data. In a cell or packet network, real-time traffic is coded (by a "codec") and emitted into the network at regular intervals. This interval must be kept small to give the real-time nature of the traffic, even if it results in data units that are smaller than would be chosen for transmission efficiency reasons. For voice an inter-packet delay of 20ms is mandated. The non-RT traffic packets may also be transmitted in grouped in bursts with very small intervals between packets in a group but with comparatively large intervals between groups.

4. Silence.

Voice is a special form of RT data flow, in that the roles of the two end point swap many times during the connection. Whilst one party talks the other listens, and then the roles are reversed. Therefore, voice traffic can be characterised by periods of activity (high throughput) followed by periods of silence (low throughput).

Although each of the characteristics listed can be interpreted as an indicator of voice traffic is being carried over a bearer, no single one can give a 100% certainty of this. In order to achieve a reasonable degree of certainty the different indicators are weighted and evaluated together, in embodiments of the present invention.

Implementation

A probe 45 can be connected to the network 15 at various points 40 in order to monitor a network circuit. The term "probe" is used herein to refer to a functionally self-contained system or sub-system designed to carry out the required analysis for a bearer in a network circuit. A probe unit can be implemented in different ways with differing levels of hardware and software implementation to carry out the packet capture and analysis. A probe may include separate modules to carry out such operations as capturing the data packet and then interpreting the actual packet or other data analysis.

A number of issues are raised when such analysis is considered. For example, in the recognition of real-time traffic as opposed to data traffic, a related sequence of packets must first be identified and analysed. Capture and analysis of such a sequence or "flow" of packets requires a great deal of probe system resources for measurement storage. Other measurement issues must also be addressed, such as establishing accurate measurement methods to deal with variations in packet arrival times and inter-packet delays, forms of "jitter" commonly referred to herein as cell delay variation (CDV).

Figure 4 is a top level block diagram showing one example of how the process for the recognition of real-time traffic can be implemented. A network signal 80 is monitored by Media Access Connection (MAC) hardware 82. A clock 84 provides the necessary timing requirements for the probe. The MAC module 82 is captures the packets on the network circuit being monitored. A timestamping component 86 then timestamps each recognised packet on arrival and a flow recognition component 88 recognises and labels packets belonging to the same data sequence, or flow.

A flow characterisation component 88 characterises the timestamped sequence. This is carried out by making a series of measurements relating to the flow that are indicative of real-time traffic. Other calculations relating to measurements taken can also be performed at this stage. A selection of measurement sources, results of measurements of call duration, coding type, jitter are fed to a correlator component 92 which produces an output 94 which indicates as to whether the flow does, or does not, contain real-time data such as voice or data.

A 'flow' is defined here as a sequence of packets delivered between the same source address and destination address, constituting a network circuit, or part thereof. A flow commences with the first packet and terminates with the last packet. The termination condition is when the connection times out.

A typical example of such an implementation might include MAC or other suitable interface hardware, an embedded processor, and a real-time clock of appropriate resolution and stability for the network circuit under scrutiny. The MAC hardware or the processor can be used to produce a timestamp for each data packet received and these timestamps converted to flows. The processor can then characterise the flows accordingly, either as real time (for example voice) or non-real time (for example web data).

The embedded processor controls the MAC and analyses the packets captured by the MAC. The processor is capable of carrying out flow recognition, protocol decoding, and traffic characterisation, using the routing information and traffic type carried in the packets. The timestamps are also used to characterise the flow.

A number of methods can be implemented by the flow characterisation component 80 of the probe. The characterisation of real-time traffic can generally be carried out by monitoring flow types and flow duration between two end points. Data calls can be distinguished from 'real-time' calls by the protocol being used to transmit them and the duration they are transmitted for. One can determine voice or video from data traffic using indicators such as, for example, transmission error coding (TCP for data, UDP for voice) and call duration (sub-one second for data compared with minutes for voice). Measurement methods can also be split broadly into simplex and duplex types, which shall now be discussed.

**Simplex Connections**

For cases of transmission of data in one direction only, that is simplex connections, a number of measurements are carried out in order to ascertain whether or not the flow is carrying real-time data traffic or not.

Characterisation Of RT Traffic By Inter-Packet Delay

It is possible to recognise real-time traffic by monitoring packet inter-arrival time (inter-packet delay) measurements of the traffic. This can distinguish real-time traffic from non-RT traffic because RT traffic, when carried over a packet network, has a source codec outputting data at a regular rate. Hence the inter-arrival time of a RT data stream will be highly correlated to a constant value. All packet inter-arrival times can considered as a set upon which standard statistical analysis can be performed. This follows from the need to transmit packets at regular intervals. For example, for voice the mean inter-arrival time will be 20ms and will have a very low standard deviation. More particularly in 'dimensionless units' the ratio of the mean, $\mu$, to standard deviation will be very high for traffic that has a regular arrival time so that a high value of ($\mu$/standard deviation) indicates a very high probability of RT-traffic. The converse will also hold true for non-RT traffic.

Reduction Of Memory Requirements In Algorithm

In order to carry out the necessary measurements and calculations for flow characterisation one must process the raw data obtained from the timestamps and packet inter-arrival times. Measuring and recording the individual timestamps or inter-packet arrival time of each packet would require a great deal of measurement storage. A reduction in the amount of processing power and time needed to complete the task can be achieved by using a summation of measurements.

Hence only the following are required: -

- the sum of values of the inter-packet delay, $\Sigma d$,
- the sum of squares of the value of inter-packet arrival delay, $\Sigma d^2$,
- the number of instances of the measure are recorded, N.

This method minimises the amount of data that need be held at any one time and the amount of processing power needed to analyse the data recovered.

A further advantage of these measures is scalability. It is possible to accumulate the values of multiple periods and the aggregate will deliver the required measures for the whole period. In this way the average and standard deviation values are determined:

The mean i.e. average:

$$\mu = \frac{\sum x}{N}$$

, and hence $N\mu = \Sigma\mu$

The variance,

$$\sigma^2 = \frac{\sum (x - \mu)^2}{N - 1}$$

The standard deviation,

$$\text{SD} = \sqrt{\sigma} = \sqrt{\frac{\sum (x - \mu)^2}{N - 1}}$$

Other derived measurements can also be deduced, such as the maximum and minimum inter-arrival time, max(d) and min(d) respectively.

Processed measurements are then passed on to the correlator component 92 for further analysis.

Management of Silence

Monitoring "voice" (as an example of RT traffic) requires suppression of monitoring of the arrival time of packets during periods of "silence", that is when there is little or no information being carried in the signal. This is both a necessary modification to accommodate the one-way nature of voice, and an indication that the connection does carry voice. That is, while there is traffic from A to B, there is no traffic in the direction B to A. The algorithm must not only deal with silence, but also the presence of silences in the RT traffic stream indicates that the stream is indeed voice.

Similarly video conferencing will exhibit periods of silence. The active time will be whilst one camera is broadcasting to all other parties, and silence for those parties watching where there is no significant signal activity.

Unless the measurement was suppressed for those measures associated with the start of traffic (after a "silence") considerable error would be introduced into the measurement. That is, the inter-packet delay (the "silence") would corrupt the measurement of average and standard deviation of inter-packet delay.

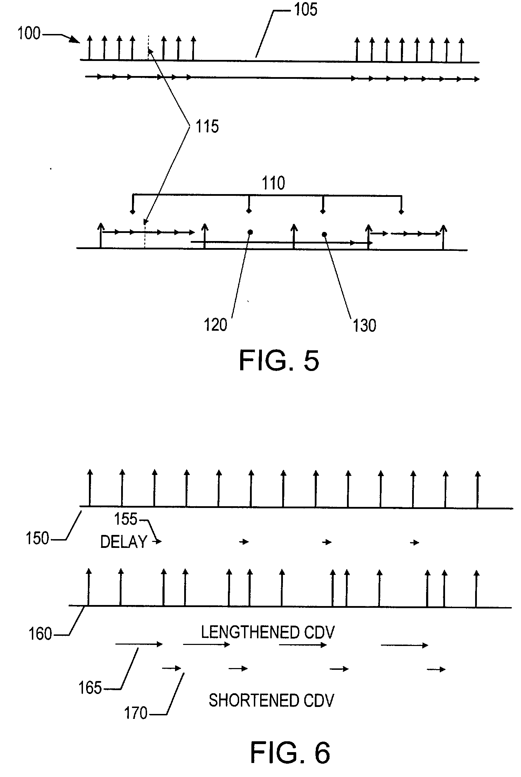

The suppression of measurement may be accomplished in a number of ways. Figure 5 illustrates a measurement scheme used to manage periods of silence. A typical voice signal will include a flow 100 with packets and periods of silence 105. Measurement buckets 110, or measurement periods, are defined which restrict when measurements can be made. The measurement buckets may contain flows of packets, flows with lost packets 115, or have zero entries 110.

The use of appropriate measurement buckets is used in the present example to deal with problems associated with silence. Only measurement buckets preceded by non-silence are used in calculations. The total measurement period is divided into a sequence of measurement buckets, each lasting for example 100ms for voice. The population for the statistical measurement is restricted to those buckets which are preceded by a bucket that is also active. This eliminates the bias error of a few large inter-arrival times and eliminates delays 130.

Additionally, other constraints on the measurements are made.

An upper bound of acceptable inter-arrival times is configured. Only inter-arrival times meeting that criterion are counted.

Silence manifests itself not only in empty buckets (such as 120, 130) but also as a very long inter-arrival time for the first traffic packet after the silence. Hence to eliminate this bias, the first sample within a bucket is not recorded. Alternatively, a separate measure of the first inter-packet arrival time can be kept which can be later removed from population collected in the normal manner.

Record And Remove Longest Sample.

For measurements where there is an extended period of silence present additional manipulation of the samples may be needed.

In order to accommodate extended periods of silence it is preferred to eliminate bias in the inter-packet arrival time metric. In order to minimise any bias in measurement of the average and standard deviation of the inter packet arrival time, the maximum and minimum inter-packet arrival times are eliminated from the from the collected statistics.

The maximum and minimum inter-arrival time, max(d) and min(d), are used further to ensure that periods of silence are handled with properly. Upon the closure of a bucket, because time has moved to the next bucket, values for max(d) and min(d) are removed from the measurement set. Silence will be the inter-arrival time of the first element, which will also be the largest. Hence upon closure of the bucket, the N, Σd, Σd² of the first and last elements are removed.

Eliminating Double Counting Of Cell Delay Variation (Jitter)

Figure 6 shows examples of cell delay variation, or jitter, in a mixed network for data packets.

A source codec sources data packets at regular intervals 150. However, the network can introduce a delay 155 in these packets so that their inter-arrival times differ from what was expected, as shown at 160.

Variations in the network system can lead to lengthened cell delays 165, and shortened cell delays 170.

For voice, the source transmits all packets with a cell delay of 20ms, but at a monitoring point, and the receiver, the delay will be different because the network may delay each packet by a different amount.

Network delay can be considered to consist of three parts:

- the fixed 'speed of light' part,
- the fixed serialisation delay,
- the variable queuing delay in the network switching elements.

Given that the source is regular, one delay will cause first a lengthened packet delay 165 followed by a reduced inter packet delay 170 in the next. In the measurement scheme as described so far this would have a double effect in the measurements and statistics, although there is only one delay 155 as the cause.

To eliminate this double error for one cause, the inter-packet arrival time is normalised against an expected arrival time. The probe 45 synchronises an internal time track against the arriving cells rather than measure the inter-cell/ packet delay. Then the difference between actual arrival time and the predicted arrival is measured so that the jitter is measured directly.

This measure of jitter eliminates possible double counting of cell delays 155. The internal time track in synchronised by using a low-pass filtered version of the incoming cells.

Estimating Cell Loss

By noting the presence of a regular traffic flow, the absence of packet within a stream can be recognised as a measure of loss.

The probe may not see all packets within a flow because the network can loose packets and the network can re-route packets around the probe since a packet switched network is not necessarily connection orientated end to end.

However in certain networks that are connection orientated, such as Asynchronous Transfer Mode (ATM), the probe can be placed so that it sees all the traffic between two end points. An example of this would be probing the edge connection of a network. In these cases loss can be determined: if no packet arrives for time bucket N, and there is only 1 packet in each of buckets N- 1, N+ 1 etc., then loss has occurred. These time buckets are synchronised with the traffic and so one measure per bucket is expected. This contrasts with the previous measures where buckets were only small enough to allow measurements during the periods of activity between periods of silence, for example, 20ms in the first case, and 1s in the second. Two or more packet-based processes may thus be conducted in parallel, with different sized buckets for each.

Packet Content

No use is made of the contents of the packets, in the present example, only their routing information and their arrival times. In other embodiments, one could for example can analyse their size to determine whether it was fast versus slow action video.

**Duplex Connections**

The following measures are possible where one has access to a bi-directional, or duplex flow.

Silence as an Indication of Voice

Noting that there are periods of silence, and that these periods of silence correlate with periods of activity in the reverse direction is an indication that there is voice communication between the two ends.

Distinguishing Single Voice And Multiple Voice Circuit

Given that a connection is deemed to be carrying voice using the aforementioned methods, it can be determined whether the circuit is being used for a single voice circuit, (a single session between two users) or many (e.g. a connection between 2 PABX's).

Assume that a circuit is judged be voice, because of its RT nature. If the connection does not exhibit silence periods, and if the data transfer content is larger than expected from a voice-coding scheme, then the connection is of multiple speech circuits. The corollary is that if it exhibits silence periods, and if the silence periods match active periods in the reverse direction, then the circuit is single channel voice.

Correlation Function

The organisation and comparison of measurements to evaluate the probability of traffic being real-time is carried out within the correlator component 92 of the probe.

For each measurement type an estimator is produced and weighted according to relevance. Some measurements are stronger indicators of voice traffic than others, for example protocol versus packet activity (silence). For example, data packets carried using TCP error correcting transmitted over IP would strongly indicate data traffic. Similarly, a long duration call with packet inter-arrival times close to 20ms would strongly indicate voice traffic. Such measures would then be weighted strongly for either voice or data. Other measurements may only be weak indicators of voice or data and would be weighted accordingly weakly.

The skilled reader will appreciate that the invention is not limited to the specific implementations and applications detailed above. It can be implemented in various combinations of hardware and software, and with our without hardwired or programmable circuits. For example, various components of the probe processing described with reference to Figure 2 could be replaced by a general purpose computer, for example a personal computer such as a notebook PC, interfaced to the network by the appropriate hardware. Another implementation is a hand-held device with the appropriate hardware connectivity and an embedded processor with software to support the other functions needed. The probe system, and particularly the analysis and reporting functions, can be situated physically remote from the network circuit to be monitored or integrated into part of some other network analysis package.

**Claims**

1. A method of classifying data traffic in a packet-based communications network conveying different classes of data, including the steps of:

    (a) monitoring a communications network for data traffic to identify a sequence of data packets of unknown class transmitted between a source address and a destination address;
    (b) measuring parameters of at least a significant part of the packet sequence; and
    (c) deriving from the measured parameters a probable classification of the data conveyed in the packet sequence.

2. A method as claimed in claim 1 where the classification is between real-time data traffic and other data in the network.

3. A method as claimed in claim 2 wherein the classification in particular distinguishes between voice traffic and other traffic.

4. A method as claimed in any of claims 1 or 2 wherein the classification in particular distinguishes between video traffic and other traffic.

5. A method as claimed in any preceding claim where in step (b) a plurality of different parameters are measured.

6. A method as claimed in any preceding claim where in step (c) said classification is determined by a combination of processes based on different parameters, the results of each process being combined with the others in accordance with a specific weighting.

7. A method as claimed in any preceding claim where the measured parameters are coding attributes of packets in the sequence.

8. A method as claimed in any preceding claim where the measured parameters further include the type of transport protocol used and specified within the packets.

9. A method as claimed in any preceding claim where the measured parameters further include the type of error protection protocols used and specified within the packets.

10. A method as claimed in claims 7, 8 or 9 where said measured parameters are particularly associated with real-time traffic, while others are generally used for general data traffic, without the need for actual knowledge of the data type.

11. A method as claimed in any preceding claim where the measured parameters include the duration of said sequence.

12. A method as claimed in claim 11 wherein sequences of longer duration in particular indicate a high probability of real-time traffic.

13. A method as claimed in any preceding claim wherein the measured parameters include correlation between traffic in said sequence and traffic in a further sequence being transported from said destination address back to said source address.

14. A method as claimed in claim 13 where the periods of activity in one direction are correlated with periods of inactivity in the reverse direction.

15. A method as claimed in any preceding claim where the measured parameters include timing parameters of individual packets within the sequence.

16. A method as claimed in claim 15 where statistical analysis of the parameters determines said classification.

17. A method as claimed in any preceding claim wherein step (b) includes measuring particular timing parameters of events in the sequence

18. A method as claimed in claim 17 wherein step (c) includes (i) deriving from the measured timing parameters one or more statistical properties of packet timing during at least a part of the sequence; and (ii) using said statistical properties to determine said classification.

19. A method as claimed in claims 17 or 18 where said events in particular comprise the arrival of each new packet for the sequence under investigation.

20. A method as claimed in any of claims 17, 18 and 19 wherein the measured parameters include the intervals between events within said sequence.

21. A method according to claim 20 wherein the uniformity of said intervals over a significant part of the sequence is used to indicate a high probability of real-time traffic.

22. A method according to claim 21 wherein the intervals have a maximum duration of 20ms.

23. A method according to any of claims 18 to 22 wherein the step (c)(i) includes filtering events to restrict the events whose measured parameters are included in the derivation of said statistical properties.

24. A method according to claim 23 wherein said filtering is performed so as to eliminate periods of inactivity from consideration in deriving said statistical properties.

25. A method according to claim 24 wherein said filtering is used to deal with problems associated with periods of silence in voice traffic, when there is an absence of detected data packets.

26. A method according to any preceding claim wherein said sequence is divided for analysis into a sequence of shorter measurement periods, and filtering is performed by reference to measurements from one measurement period at a time.

27. A method according to claim 26 wherein said period is typically 100ms.

28. A method according to claims 25, 26 or 27 wherein the filtering operates simply to omit or delete certain samples from the statistical data, or modifies those samples and/or the statistical database in some predetermined way.

29. A method according to any of claims 25 to 28 wherein only measurement periods preceded by periods containing significant activity are included in the statistical derivation.

30. A method according to any of claims 25 to 28 wherein the first sample within each measurement period is discarded to eliminate bias in the measurements made.

31. A method according to any of claims 23 to 28 wherein a separate record of the first sample is kept which is later removed from population collected in the normal manner.

32. A method according to any preceding claim wherein the amount of raw data obtained by monitoring network traffic is reduced by aggregating data for each measurement period, and optionally for groups of measurement periods.

33. A method according to claim 32 wherein summing the samples and the samples squared, while maintaining a count of the samples summed in this way, enables a variety of statistical processes to be performed.

34. A method according to any preceding claim wherein there is included steps to compensate for variations in the packet arrival or other event times caused by outside influences and to accommodate specific traffic patterns, such as when the absence of a signal can lead to a misinterpretation of the data.

35. A method according to claim 31 wherein errors due to the inter-packet arrival time are normalised against an expected arrival time.

36. A method according to claim 34 wherein the probe can synchronise an internal time track against the arriving data packets so as to measure differences between actual arrival times and predicted arrival times.

37. A method according to any preceding claim wherein said measurement includes further measurements of correlation between parameters of traffic in opposite directions of a duplex connection.

38. A method according to claim 37 where correlation between periods of high traffic in one direction and low traffic in the other are used as a strong indicator of voice traffic.

39. A method according to claim 38 wherein voice traffic in one direction is generally correlated with silence in the other.

40. A method according to any preceding claim wherein additional measurements are used to distinguish multiple from single voice circuits and, where a connection is carrying multiple voice circuits, to take account of the particular attributes of such a connection.

41. A method according to any preceding claim wherein timestamping of captured and re-assembled data packets is carried out on closure of the bit stream representing a data packet and written contiguous with the packet.

42. A method according to any of claims 1 to 41 wherein the process of timestamping packets is carried out separately from the detection and assembling of data packets.

43. A method according to any preceding claim wherein the determined classification is used to automatically control configuration of the network.

44. A method according to any preceding claim further comprising using the determined classification to report usage of the network for accounting purposes.

45. An apparatus for classifying data traffic in a packet-based communications network conveying different classes of data, the apparatus comprising means arranged to perform the steps of a method according to the invention as set forth in claims 1 to 44.

FIG. 1

FIG. 2

A

B

FIG. 3

FIG. 4

FIG. 5

FIG. 6

**European Patent Office**

## EUROPEAN SEARCH REPORT

Application Number

EP 00 30 9851

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 028 842 A (CHAPMAN ALAN STANLEY JOHN ET AL) 22 February 2000 (2000-02-22) | 1-5,7,8, 10,11, 15-17, 20,21,45 | H04L12/56 |
| Y | * column 3, line 7 - column 4, line 43; figure 1 * <br> * column 5, line 57 - column 6, line 14 * | 13 | |
| Y | WO 98 30059 A (DIAMOND JEFFREY E ;BOURLAS YAIR (CA); MCLEOD ROBERT D (CA); RUEDA) 9 July 1998 (1998-07-09) | 13 | |
| A | * page 18, line 8 - line 25 * | 1-12, 14-45 | |

TECHNICAL FIELDS SEARCHED (Int.Cl.7)

H04L

The present search report has been drawn up for all claims

| Place of search | Date of completion of the search | Examiner |
|---|---|---|
| THE HAGUE | 6 June 2001 | Gregori, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**                     EP 00 30 9851

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2001

| Patent document cited in search report | | Publication date | Patent family member(s) | Publication date |
|---|---|---|---|---|
| US 6028842 | A | 22-02-2000 | WO 9828938 A | 02-07-1998 |
| | | | WO 9828939 A | 02-07-1998 |
| | | | EP 0954943 A | 10-11-1999 |
| | | | JP 2000508145 T | 27-06-2000 |
| | | | US 6023456 A | 08-02-2000 |
| WO 9830059 | A | 09-07-1998 | NONE | |

EPO FORM P0459

For more details about this annex : see Official Journal of the European Patent Office, No. 12/82